# EUROPÄISCHE PATENTSCHRIFT

(11) **EP 3 041 747 B1**
(45) Veröffentlichungstag und Bekanntmachung des Hinweises auf die Patenterteilung: **27.02.2019**
(21) Anmeldenummer: 14758549.1
(22) Anmeldetag: 02.09.2014
(51) Int. Cl.: B29C 65/08, B29C 65/18, B29C 65/74, B65B 9/067, B65B 51/30, B29C 65/48, B29C 65/78

(54) **HORIZONTALQUERSIEGELSTATION**
HORIZONTAL TRANSVERSE SEALING STATION
STATION HORIZONTALE DE SOUDAGE TRANSVERSAL

(30) Priorität: 03.09.2013 DE 102013217548
(43) Veröffentlichungstag der Anmeldung: 13.07.2016
(73) Patentinhaber: Robert Bosch GmbH, 70442 Stuttgart (DE)
(72) Erfinder: THAERIGEN, Jan, CH-8224 Löhningen (CH)
(86) Internationale Anmeldenummer: PCT/EP2014/068570
(87) Internationale Veröffentlichungsnummer: WO 2015/032735

(56) Entgegenhaltungen:
- WO-A1-2009/023894
- JP-A- 2006 027 671
- US-B1- 7 730 698

## Beschreibung

### Stand der Technik

Es ist bereits im Patent US 7,730,698 B1 eine Horizontalquersiegelstation für eine horizontale Schlauchbeutelmaschine zur Erstellung von Quersiegelnähten an zumindest einem, in einer kontinuierlichen, zumindest im Wesentlichen horizontalen Transportrichtung transportierten Folienschlauch, mit einer Quersiegelstationsbasis, die mit der Schlauchbeutelmaschine fest verbunden ist, mit einer Quersiegeleinheit und mit zumindest einem an der Quersiegeleinheit beweglich gelagerten, von zwei Siegelbacken gebildeten Siegelbackenpaar, dessen Siegelflächen sich bei einem Siegelvorgang in einer Siegelbewegung, die relativ zur Quersiegeleinheit zumindest eine Bewegungskomponente in der Transportrichtung aufweist, aneinander annähern, um zwischen den Siegelflächen Materiallagen des Folienschlauchs unter Erwärmung und/oder Ausübung von Druck zu versiegeln und am Ende des Siegelvorgangs wieder zu entfernen, vorgeschlagen worden.

### Offenbarung der Erfindung

Die Erfindung geht aus von einer Horizontalquersiegelstation, insbesondere für eine horizontale Schlauchbeutelmaschine, zur Erstellung von Quersiegelnähten an zumindest einem, in einer kontinuierlichen, zumindest im Wesentlichen horizontalen Transportrichtung transportierten Folienschlauch, mit einer Quersiegelstationsbasis, die mit einer Verpackungsmaschine fest verbunden ist, mit einer Quersiegeleinheit und mit zumindest einem an der Quersiegeleinheit beweglich gelagerten, von zwei Siegelbacken gebildeten Siegelbackenpaar, dessen Siegelflächen sich bei einem Siegelvorgang in einer Siegelbewegung aneinander annähern, die relativ zur Quersiegeleinheit zumindest eine Bewegungskomponente in der Transportrichtung aufweist, um zwischen den Siegelflächen Materiallagen des Folienschlauchs unter Erwärmung und/oder Ausübung von Druck zu versiegeln und am Ende des Siegelvorgangs wieder zu entfernen.

Es wird erfindungsgemäß vorgeschlagen, dass die Quersiegeleinheit an der Quersiegelstationsbasis mit einer zur Transportrichtung zumindest im Wesentlichen parallelen Verschiebebewegung antreibbar gelagert ist. Unter einer "horizontalen Schlauchbeutelmaschine" soll in diesem Zusammenhang insbesondere eine, dem Fachmann als HFFS "Horizontal Form Fill Seal"-Verpackungsmaschine bekannte Verpackungsmaschine verstanden werden, die dazu vorgesehen ist, aus einer Materialbahn zumindest einen Folienschlauch um ein oder mehrere zu verpackende Produkte zu formen und diesen an beiden Enden zu verschließen. Zu verpackende Produkte und der um die Produkte geformte Folienschlauch werden während des Formens des Schlauchs, des Einbringens der zu verpackenden Produkte in den Folienschlauch und des Verschließens des Schlauchs zumindest im Wesentlichen in einer horizontalen Transportrichtung bewegt. Unter "zumindest im Wesentlichen horizontal" soll in diesem Zusammenhang insbesondere eine Richtung verstanden werden, die weniger als 60°, bevorzugt weniger als 45°, besonders bevorzugt weniger als 20°, von einer senkrecht zu einer Gewichtskraft angeordneten Horizontalen abweicht. Unter "kontinuierlich" soll in diesem Zusammenhang insbesondere verstanden werden, dass Geschwindigkeitsänderungen der Transportbewegung stetig erfolgen. Insbesondere soll der Siegelvorgang während der kontinuierlichen, stillstandsfreien Transportbewegung erfolgen. Bevorzugt liegen zu verpackende Produkte während einer Zufuhrbewegung auf einem Zufuhrträger auf. Die Materialbahn wird bevorzugt um die zu verpackenden Produkte zu einem Folienschlauch geformt. Der Folienschlauch wird bevorzugt durch eine Längssiegeleinheit verschlossen, die in Transportrichtung vor der Quersiegeleinheit angeordnet ist. Zum Bilden des Schlauchs verbindet die Längssiegeleinheit die beiden parallel zur Transportrichtung der Materialbahn angeordneten Außenkanten der Materialbahn bevorzugt mit einer Flossennaht, wobei die Innenseiten der Materialbahnkanten aufeinandergelegt und verbunden werden. Bevorzugt verbindet die Längssiegeleinheit zwei Materiallagen der Materialbahn. Unter einer "Materiallage" soll in diesem Zusammenhang insbesondere eine Lage der Materialbahn verstanden werden, wobei eine Materiallage mehrere Schichten aufweisen kann, wie insbesondere eine Trägerschicht und eine Siegelschicht. Die Längssiegeleinheit enthält bevorzugt eine oder mehrere Siegeleinrichtungen, zum Beispiel Siegelrollenpaare und/oder Siegelbacken, die Außenkanten unter Erwärmung der Materialbahnlagen und/oder Ausübung von Druck auf die Materialbahnlagen miteinander verbinden. Zu verpackende Produkte werden bevorzugt durch geeignete Mittel, wie eine Zufuhrkette mit Mitnehmern, welche die Produkte in Transportrichtung schieben, in den Folienschlauch eingeschoben. Unter einer "Quersiegeleinheit" soll in diesem Zusammenhang insbesondere eine Einheit verstanden werden, die dazu vorgesehen ist, den Folienschlauch in Transportrichtung vor und hinter zu verpackenden Produkten zu verschließen. Es ist auch möglich, dass aus einer oder mehreren Materialbahnen mehrere Folienschläuche in Transportrichtung nebeneinander gebildet werden. Dies ist insbesondere bei mehrbahnigen horizontalen Schlauchbeutelmaschinen der Fall, bei denen auf mehreren in Transportrichtung nebeneinander angeordneten Bahnen zu verpackende Produkte zugeführt werden. Die horizontale Schlauchbeutelmaschine kann in diesem Fall für jede Bahn einen Folienschlauch um zu verpackende Produkte bilden und entlang der Transportrichtung mit Längssiegeleinheiten verschließen. Die Folienschläuche können nebeneinander durch die Quersiegeleinheit transportiert werden. Die Quersiegeleinheit verschließt die Folienschläuche vor und hinter den zu verpackenden Produkten bevorzugt in einem gemeinsamen Siegelvorgang. Die Quersiegeleinheit verschließt den Folienschlauch bevorzugt mit Quersiegelnähten, die zumindest im Wesentlichen quer zur Transportrichtung angeordnet sind. Unter "quer" soll in diesem Zusammenhang insbesondere eine Richtung verstanden werden, die von einer Senkrechten zur Verpackungsrichtung und der Gewichtskraft weniger als 45°, bevorzugt weniger als 20°, besonders bevorzugt weniger als 10°, abweicht. Bevorzugt ist die Siegelnaht zumindest im Wesentlichen horizontal angeordnet. Besonders bevorzugt verschließt die Horizontalquersiegeleinheit in einem Siegelvorgang gleichzeitig ein in Transportrichtung hinteres Ende einer Packung sowie ein in Transportrichtung vorderes Ende einer nachfolgenden Packung. Besonders bevorzugt trennt die Horizontalquersiegeleinheit in demselben Arbeitsschritt den die Packungen bildenden Folienschlauch und somit die aufeinander folgenden Packungen. Die Quersiegeleinheit versiegelt den Folienschlauch, indem Siegelflächen der Siegelbacken eines Siegelbackenpaars die Materiallagen von einander gegenüberliegenden Seiten des Folienschlauchs zusammenpressen. Unter einem "Siegelbackenpaar" sollen in diesem Zusammenhang zwei Siegelbacken verstanden werden, zwischen deren Siegelflächen der Folienschlauch versiegelt wird. Die Quersiegeleinheit kann mehrere Siegelbackenpaare aufweisen. Bevorzugt enthält eine erste Siegelbacke des Siegelbackenpaars ein Quetschmesser und eine zweite Siegelbacke des Siegelbackenpaars einen Gegenhalter. Der Folienschlauch kann zwischen dem Quetschmesser und dem Gegenhalter durchtrennt werden. Die Materiallagen können bevorzugt Siegelschichten aufweisen, die ein Verbinden der Materiallagen fördern. Die Siegelschichten können insbesondere eine Schicht aufweisen, die insbesondere durch Druck eine Verbindung mit der weiteren Siegelschicht bildet, wie einen Kontaktkleber. Die Siegelbacken können beheizt sein und neben Druck Wärme an die Materiallagen abgeben. Die Siegelschichten können eine Schicht aufweisen, die insbesondere bei einer Erwärmung bei einer niedrigeren Temperatur als eine Außenseite der Materialbahn schmilzt und mit der weiteren Siegelschicht eine Verbindung bildet, insbesondere ein Polymer mit einer niedrigeren Schmelztemperatur als die Außenseite und/oder Trägerschicht der Materialbahn. Die Siegelschichten können aufschmelzen und sich so verbinden. Ein Schmelzen der Außenseite der Materialbahn bei einem Kontakt mit den Siegelbacken kann vermieden werden. Der Fachmann kennt weitere Verfahren, die ein Versiegeln der Materiallagen fördern wie insbesondere die Beaufschlagung der Siegelbacken mit hochfrequenten Schwingungen beim Ultraschallsiegeln. Die Siegelbacken können die hochfrequenten Schwingungen in Form von Druckschwingungen an die Materiallagen weitergeben, so dass sich die Materiallagen deformieren und aufgrund innerer Dämpfung Wärme entsteht. Unter einer "Siegelbewegung" soll ein Bewegungsablauf eines Siegelbackenpaars verstanden werden, in dem sich die Siegelbacken aneinander annähern, eine Siegelnaht erstellen und sich wieder entfernen. Die Siegelbewegung kann eine zyklische Bewegung zwischen zwei Endpunkten sein. Bevorzugt ist die Siegelbewegung eine umlaufende Bewegung entlang einer geschlossenen Bahn wie insbesondere einer Kreisbahn oder einer D-förmigen Bahn. Dem Fachmann sind weitere vorteilhafte Siegelbewegungen bekannt. Unter einer Siegelbewegung mit einer "Bewegungskomponente in der Transportrichtung" soll in diesem Zusammenhang insbesondere verstanden werden, dass die Siegelbewegung, zumindest während die Siegelflächen die Materiallagen des Folienschlauchs berühren, um eine Siegelung zu erzeugen, relativ zur Quersiegeleinheit eine Bewegungskomponente in der Transportrichtung des Folienschlauchs aufweist. Unter einer "zur Transportrichtung zumindest im Wesentlichen parallelen Verschiebebewegung" soll in diesem Zusammenhang insbesondere eine Bewegung entlang einer Richtung verstanden werden, die weniger als 10°, bevorzugt weniger als 5°, besonders bevorzugt weniger als 1°, von der Transportrichtung des Folienschlauchs im Bereich der Quersiegeleinheit abweicht. Die Verschiebebewegung kann vorteilhaft eine Geschwindigkeitsdifferenz in Transportrichtung zwischen dem Folienschlauch und den Siegelflächen des Siegelbackenpaars ausgleichen. Insbesondere können die Siegelflächen während des Siegelvorgangs bezogen auf die Quersiegeleinheit in Transportrichtung mit einer geringeren Geschwindigkeit als der Folienschlauch bewegt werden. Die Geschwindigkeitsdifferenz kann durch die Verschiebebewegung ausgeglichen werden. Eine aus der Siegelbewegung und der Verschiebebewegung resultierende Bewegung der Siegelflächen kann in Transportrichtung synchron mit der Transportbewegung des Folienschlauchs sein. Die Siegelflächen können während eines besonders langen Zeitraums die Materiallagen erwärmen und/oder Druck auf die Materiallagen ausüben. Eine Qualität der Quersiegelnähte kann besonders hoch sein. Insbesondere kann eine Siegeldauer unabhängig von einer Foliengeschwindigkeit in der Transportrichtung sein. Die Geschwindigkeitsdifferenz in Transportrichtung zwischen Siegelflächen und Folienschlauch kann durch die Verschiebebewegung ausgeglichen werden. Die Bewegung der Siegelflächen in Richtung des Folienschlauchs kann unabhängig von der Lagerung der Siegelbacken an der Quersiegeleinheit erzeugt werden. Toleranzen der Verschiebebewegung haben keinen Einfluss auf die Lage der Siegelbacken eines Siegelbackenpaars zueinander. Ein Siegeldruck zwischen den Siegelflächen eines Siegelbackenpaars kann von Toleranzen der Verschiebebewegung zumindest weitgehend unbeeinflusst sein.

Weiter wird eine Antriebs- und/oder Steuereinheit vorgeschlagen, die dazu vorgesehen ist, die Quersiegeleinheit in der Verschiebebewegung während des Siegelvorgangs so anzutreiben, dass eine Geschwindigkeitsdifferenz der Siegelbewegung und des Folienschlauchs in der Transportrichtung zumindest im Wesentlichen ausgeglichen wird. Unter einer "Antriebs- und/oder Steuereinheit" soll insbesondere eine Einheit verstanden werden, die dazu vorgesehen ist, die Verschiebebewegung auszulösen und/oder zu beeinflussen. Die Antriebs- und/oder Steuereinheit kann Antriebe, wie Getriebe- und/oder Kurbeltriebe, Motoren, insbesondere Elektromotoren, sowie mechanische und/oder elektrische Steuervorrichtungen aufweisen. Unter einem "Ausgleichen einer Geschwindigkeitsdifferenz der Siegelbewegung und des Folienschlauchs in der Transportrichtung" soll in diesem Zusammenhang insbesondere verstanden werden, dass die Verschiebebewegung so gewählt wird, dass die Siegelflächen und der Folienschlauch, zumindest während sie einander berühren, in Transportrichtung zumindest im Wesentlichen eine übereinstimmende Geschwindigkeit aufweisen. Unter "zumindest im Wesentlichen" soll in diesem Zusammenhang eine Abweichung von weniger als 10%, bevorzugt weniger als 5%, besonders bevorzugt weniger als 1%, verstanden werden. Die Siegelflächen können während des Siegelvorgangs dem Folienschlauch besonders gut folgen. Eine Relativgeschwindigkeit zwischen Folienschlauch und Siegelflächen kann vermieden werden. Ein Stauchen des Folienschlauchs und/oder Ziehen am Folienschlauch zwischen den Siegelflächen kann vermieden werden. Eine Siegelqualität kann besonders hoch sein. Eine Beschädigung des Folienschlauchs kann vermieden werden. Bevorzugt ist die Antriebs- und/oder Steuereinheit dazu vorgesehen, die Quersiegeleinheit zwischen zwei Siegelvorgängen entgegen der Transportrichtung in eine Ausgangsposition zurück zu bewegen und für einen nächsten Siegelvorgang wieder die Siegelflächen mit dem Folienschlauch in Transportrichtung zu synchronisieren. Die Siegelflächen können in einer Abfolge von Siegelvorgängen mit dem Folienschlauch synchron bewegt werden. Bevorzugt kann die Geschwindigkeit der Siegelbewegung der Siegelbacken während des Siegelvorgangs so festgelegt werden, dass eine gewünschte Siegelzeit erreicht wird. Die Siegelzeit kann zum Beispiel durch Eigenschaften des Materials des Folienschlauchs und/oder Anforderungen an eine Qualität der Quersiegelnähte bestimmt werden. Bevorzugt kann die Verschiebebewegung die verbleibende Geschwindigkeitsdifferenz zwischen Siegelbewegung und Transportbewegung des Folienschlauchs ausgleichen. Die Siegelzeit kann weitgehend unabhängig von der Geschwindigkeit der Transportbewegung des Folienschlauchs festgelegt werden. Bei gegebener Siegelzeit können höhere Geschwindigkeiten des Folienschlauches erreicht werden. Begrenzende Faktoren bei der Festlegung der Siegelzeit können insbesondere eine mögliche Auslenkung, Beschleunigung und/oder Geschwindigkeit der Verschiebebewegung sein.

Erfindungsgemäß weist die Horizontalquersiegelstation eine Massenausgleichseinheit mit zumindest einer antreibbar gelagerten Ausgleichsmasse auf, die in einer Ausgleichsbewegung mit zumindest einer zur Verschiebebewegung parallelen Bewegungskomponente so angetrieben wird, dass sich die durch die Verschiebebewegung und die durch die Ausgleichsbewegung verursachten Massenkräfte zumindest teilweise aufheben. Unter "zumindest teilweise aufheben" soll in diesem Zusammenhang insbesondere verstanden werden, dass eine Resultierende der Massenkräfte in Richtung der Verschiebebewegung kleiner als 50%, bevorzugt kleiner als 25%, besonders bevorzugt kleiner als 10%, der durch die Verschiebebewegung der Quersiegeleinheit in Verschieberichtung verursachten Massenkräfte ist. Bevorzugt kann die Ausgleichsbewegung eine lineare, der Verschiebebewegung entgegengesetzte Bewegung sein. Ideal sind mehrere Ausgleichsmassen so angeordnet, dass sich der virtuelle Massenschwerpunkt der Ausgleichsmassen und der virtuelle Massenschwerpunkt der Quersiegeleinheit entlang der Verschieberichtung auf einer Linie befinden. Unter einem "virtuellen Massenschwerpunkt" der Quersiegeleinheit beziehungsweise der Ausgleichsmasse soll in diesem Zusammenhang der gemeinsame Schwerpunkt aller Massen verstanden werden, die die Quersiegeleinheit beziehungsweise die Ausgleichsmasse bilden. Die Massenkräfte können in diesem Idealfall vollständig ausgeglichen werden. Bevorzugt ist ein Abstand zwischen dem virtuellen Massenschwerpunkt der Ausgleichsmasse und einer die Quersiegeleinheit an der Quersiegelstationsbasis verschiebbar lagernden Linearführung in Richtung der Gewichtskraft gleich groß oder kleiner als ein Abstand in Richtung der Gewichtskraft zwischen dem virtuellen Masseschwerpunkt der Quersiegeleinheit zur Linearführung. Bevorzugt fluchten die virtuellen Massenschwerpunkte der Quersiegeleinheit und der Ausgleichsmasse in Transportrichtung. Unter "fluchten" soll in diesem Zusammenhang insbesondere verstanden werden, dass sich die virtuellen Massenschwerpunkte zumindest im Wesentlichen in einer Ebene bewegen, die von der Transportrichtung und der Richtung der Gewichtskraft aufgespannt wird. Resultierende Massenkräfte der Ausgleichs- und der Verschiebebewegung können gering bleiben. Ein konstruktiver Aufwand kann gegenüber einem idealen vollständigen Ausgleich der Massenkräfte reduziert sein. Vibrationen können reduziert werden. Die Verschiebebewegung kann mit besonders hohen Geschwindigkeiten ausgeführt werden. Transportgeschwindigkeiten des Folienschlauchs können besonders hoch sein. Die Horizontalquersiegelstation kann besonders leistungsfähig sein.

Weiter wird eine Energiespeichereinheit vorgeschlagen, die dazu vorgesehen ist, auf die Quersiegeleinheit eine einer Auslenkung der Verschiebebewegung entgegengesetzte Rückstellkraft auszuüben. Die Energiespeichereinheit kann insbesondere zumindest ein Federelement aufweisen. Bevorzugt übt die Energiespeichereinheit die Rückstellkraft zwischen der Quersiegeleinheit und der Quersiegelstationsbasis, besonders bevorzugt zwischen der Quersiegeleinheit und der Massenausgleichseinheit aus. Wird die Rückstellkraft zwischen der Quersiegeleinheit und der Massenausgleichseinheit ausgeübt, können Einflüsse der Rückstellkraft auf die Quersiegelstationsbasis und/oder die Verpackungsmaschine vermieden werden. Vibrationen können reduziert werden. Unter einer "Auslenkung" soll in diesem Zusammenhang ein Weg der Verschiebebewegung ausgehend von einer Neutralstellung verstanden werden, in der die Energiespeichereinheit keine Rückstellkraft auf die Quersiegeleinheit ausübt. Bevorzugt bewirkt die Energiespeichereinheit bei einem Verschieben der Quersiegeleinheit bei der Verschiebebewegung beidseitig der Neutralstellung eine Rückstellkraft in Richtung der Neutralstellung. Bevorzugt weist die Rückstellkraft in Umkehrpunkten der Verschiebebewegung ihre Maxima auf. Antriebskräfte für die Verschiebebewegung können verringert und/oder gleichmäßiger werden. Im Umkehrpunkt kann eine besonders hohe Beschleunigung der Verschiebebewegung erreicht werden.

Weiter wird eine Stützeinheit vorgeschlagen, die dazu vorgesehen ist, den Folienschlauch in einem Siegelbereich der Quersiegeleinheit vor und/oder nach dem Siegelvorgang gegen eine Gewichtskraft abzustützen. Unter einem "Siegelbereich" soll in diesem Zusammenhang ein Bereich der Quersiegeleinheit verstanden werden, der von den Siegelflächen des Siegelbackenpaars überstrichen wird, während diese den Folienschlauch berühren. Die Stützeinheit kann beidseitig der zumindest einen in Richtung der Gewichtskraft unter dem Folienschlauch angeordneten Siegelbacke angeordnet sein. Es ist auch möglich, dass die Stützeinheit an anderen Komponenten der Horizontalquersiegelstation oder Verpackungsmaschine gelagert ist und synchron mit der Quersiegeleinheit bewegt wird. Ein Absinken und/oder Durchhängen des Folienschlauchs in Richtung der Gewichtskraft vor und/oder hinter dem Siegelbereich kann vermieden werden.

Weiter wird vorgeschlagen, dass die Horizontalquersiegelstation einen Kurbeltrieb aufweist, der dazu vorgesehen ist, die Verschiebebewegung aus einer rotierenden Antriebsbewegung eines Verschiebeantriebs zu erzeugen. Bevorzugt ist der Kurbeltrieb Teil der Antriebs- und Steuereinheit, die zum Antrieb der Verschiebebewegung vorgesehen ist. Unter einem "Kurbeltrieb" soll in diesem Zusammenhang insbesondere ein Getriebe verstanden werden, das zu einer Bewegungsübertragung zumindest eine Kurbel aufweist. Der Kurbeltrieb kann vorteilhaft die rotierende Antriebsbewegung in eine zyklische lineare Verschiebebewegung übersetzen. Eine rotierende Antriebsbewegung kann besonders geringe, zyklische Massenkräfte aufweisen. Vibrationen können vermieden werden. Ein Umsteuern der Antriebsbewegung des Verschiebeantriebs an Umkehrpunkten des Verschiebeantriebs kann vermieden werden. In einer alternativen Ausgestaltung der Erfindung wird vorgeschlagen, dass die Antriebs- und/oder Steuereinheit einen Kurbeltrieb aufweist, der dazu vorgesehen ist, die Verschiebebewegung aus einer Antriebsbewegung eines Siegelantriebs der Quersiegeleinheit zu erzeugen. Unter einem "Siegelantrieb der Quersiegeleinheit" soll in diesem Zusammenhang insbesondere ein Antrieb verstanden werden, der dazu vorgesehen ist, die Siegelbewegung anzutreiben. Bevorzugt kann die Antriebsbewegung eine umlaufende rotierende Antriebsbewegung sein. Ein separater Antrieb für die Verschiebebewegung kann entfallen. Es kann besonders einfach sichergestellt werden, dass die Siegelbewegung und die Verschiebebewegung synchron sind. Bevorzugt weist der Kurbeltrieb zumindest eine Verstelleinrichtung auf, die dazu vorgesehen ist, ein Übersetzungsprofil zwischen der rotierenden Antriebsbewegung und der Verschiebebewegung einzustellen. Ein Verhältnis von Siegelbewegung und Verschiebebewegung kann vorteilhaft beeinflusst werden.

In einer weiteren Ausgestaltung der Erfindung wird vorgeschlagen, dass die Horizontalquersiegelstation einen Linearantrieb aufweist, der dazu vorgesehen ist, die Verschiebebewegung zu erzeugen. Bevorzugt ist der Linearantrieb Teil der Antriebs- und Steuereinheit, die zum Antrieb der Verschiebebewegung vorgesehen ist. Bevorzugt bewegt sich ein Linearmotor parallel in Gegenrichtung zu der Verschiebebewegung. Bevorzugt ist ein Hebelgetriebe dazu vorgesehen, die Bewegung des Linearmotors in Gegenrichtung auf die Quersiegeleinheit zu übertragen. Bevorzugt ist ein Übersetzungsverhältnis der Bewegung des Linearmotors und der Quersiegeleinheit so gewählt, dass es einem Kehrwert des Verhältnisses der jeweiligen Massen des Linearmotors und der Quersiegeleinheit zueinander entspricht. Massenkräfte des Linearmotors und der Quersiegeleinheit können sich zumindest teilweise aufheben. Der Linearmotor kann eine Massenausgleichseinheit bilden und/oder Teil einer Massenausgleichseinheit sein. Die Verschiebebewegung kann unabhängig von der Siegelbewegung eingestellt werden. Mechanische Umstellungen können entfallen. Ein Geschwindigkeitsprofil der Verschiebebewegung kann besonders flexibel eingestellt werden.

Es wird vorgeschlagen, dass die Siegelbacken an drehbar an der Quersiegeleinheit gelagerten Siegelwellen gelagert sind. Bevorzugt sind zwei Siegelwellen in Richtung der Gewichtskraft oberhalb und unterhalb des Folienschlauchs angeordnet und lagern jeweils eine Siegelbacke eines Siegelbackenpaars oder mehrere Siegelbacken mehrerer Siegelbackenpaare. Bevorzugt werden die Siegelflächen der Siegelbacken entlang von Kreisbahnen angetrieben, wobei Siegelachsen der Siegelwellen Zentren der Kreisbahnen bilden. Die Quersiegeleinheit kann besonders kostengünstig sein. Die Siegelbacken können mit einer besonders hohen Geschwindigkeit rotierend angetrieben werden. Es ist möglich, dass insbesondere zur Herstellung von kurzen Packungen mit kurz aufeinanderfolgenden Quersiegelnähten mehrere Siegelbacken mehrerer Siegelbackenpaare an den Siegelwellen angeordnet sind, insbesondere zwei bis sechs Siegelbacken von zwei bis sechs Siegelbackenpaaren. Die Siegelwellen können in einer geringeren Geschwindigkeit rotieren. Bevorzugt kann die Rotationsgeschwindigkeit der Siegelbacken während des Kontakts der Siegelbacken mit dem Folienschlauch so reduziert werden, dass die Tangentialgeschwindigkeit der Siegelflächen geringer ist als die Transportgeschwindigkeit des Folienschlauchs. Die Verschiebebewegung kann diese Geschwindigkeitsdifferenz ausgleichen. Es kann mit rotierenden Siegelbacken eine besonders lange Siegelzeit erreicht werden. Bevorzugt werden die Rotationsgeschwindigkeit, mit der die Siegelbacken zwischen zwei Siegelvorgängen angetrieben werden, und die Geschwindigkeit der Verschiebebewegung so gewählt, dass ein Abstand von aufeinanderfolgenden Quersiegelnähten am Folienschlauch einer gewünschten Packungslänge entspricht. Insbesondere kann die Rotationsgeschwindigkeit zwischen den Siegelvorgängen erhöht werden. Dieses Anpassen der Rotationsgeschwindigkeit zwischen Siegelvorgängen zur Erreichung der gewünschten Packungslänge ist dem Fachmann als "Hinkung" bekannt. Bevorzugt kann die Hinkung auf die Siegelbewegung und die Verschiebebewegung aufgeteilt werden. Beschleunigungsspitzen des Antriebs der Siegelbewegung und/oder der Verschiebebewegung können reduziert werden werden. Es sind auch weitere, dem Fachmann als sinnvoll erscheinende Ausbildungen einer Quersiegeleinheit denkbar. Insbesondere können zumindest zwei unabhängige Siegelantriebe dazu vorgesehen sein, zumindest zwei Siegelbackenpaare voneinander unabhängig anzutreiben. Die jeweils zwei Siegelbacken jedes Siegelbackenpaars können um zwei gemeinsame Siegelachsen der Siegelbackenpaare rotieren. Insbesondere können mehrere Siegelwellen mit unabhängigen Siegelantrieben konzentrisch zu den zwei Siegelachsen angeordnet sein und jeweils eine Siegelbacke der Siegelbackenpaare lagern. Das weitere oder die weiteren Siegelbackenpaare können, während ein Siegelbackenpaar einen Siegelvorgang ausübt, mit einer vom siegelnden Siegelbackenpaar abweichenden Geschwindigkeit angetrieben werden und/oder, während das eine Siegelbackenpaar siegelt, eine Hinkbewegung ausführen. Für die Hinkbewegung notwendige Beschleunigungen können geringer sein. Die Siegelbacken können während des Siegelvorgangs auf eine besonders geringe Geschwindigkeit abgebremst werden. Es können besonders lange Siegelzeiten erreicht werden. Besonders vorteilhaft kann die Quersiegeleinheit die Siegelbacken an Kurbeltrieben in einer D-förmigen Siegelbewegung lagern. Die Siegelbacken können während einer geraden Teilstrecke der D-förmigen Siegelbewegung in Transportrichtung gemeinsam mit dem Folienschlauch bewegt werden. Die Siegelflächen können den Folienschlauch entlang einer geraden Teilstrecke der Siegelbewegung berühren. Siegelzeiten können weiter verlängert werden. Es ist ebenfalls möglich, dass eine oder mehrere Siegelachsen von Siegelwellen in einer Richtung senkrecht zur Transportrichtung verschiebbar gelagert sind.

Weiter wird eine horizontale Schlauchbeutelmaschine mit einer Horizontalquersiegelstation vorgeschlagen. Die horizontale Schlauchbeutelmaschine kann besonders lange Siegelzeiten aufweisen. Eine Packungsqualität kann besonders hoch sein. Es können Verpackungsmaterialien, die hohe Siegelzeiten benötigen, in hoher Geschwindigkeit verarbeitet werden. Alternativ können bei gleicher Siegelzeit höhere Geschwindigkeiten erreicht werden.

Die erfindungsgemäße Horizontalquersiegelstation soll hierbei nicht auf die oben beschriebene Anwendung und Ausführungsform beschränkt sein. Insbesondere kann die erfindungsgemäße Horizontalquersiegelstation zu einer Erfüllung einer hierin beschriebenen Funktionsweise eine von einer hierin genannten Anzahl von einzelnen Elementen, Bauteilen und Einheiten abweichende Anzahl aufweisen sofern die Horizontalquersiegelstation innerhalb des Umfangs der Ansprüche bleibt.

### Zeichnung

Weitere Vorteile ergeben sich aus der folgenden Zeichnungsbeschreibung. In der Zeichnung sind zwei Ausführungsbeispiele der Erfindung dargestellt.

Es zeigen:
- Fig. 1: eine schematische Darstellung einer Verpackungsmaschine mit einer Horizontalquersiegelstation mit einer an einer Quersiegelstationsbasis verschiebbaren Quersiegeleinheit,
- Fig. 2: eine schematische Darstellung der Horizontalquersiegelstation und
- Fig. 3: eine schematische Darstellung einer Horizontalquersiegelstation mit einer an einer Quersiegelstationsbasis verschiebbaren Quersiegeleinheit in einem zweiten Ausführungsbeispiel.

### Beschreibung der Ausführungsbeispiele

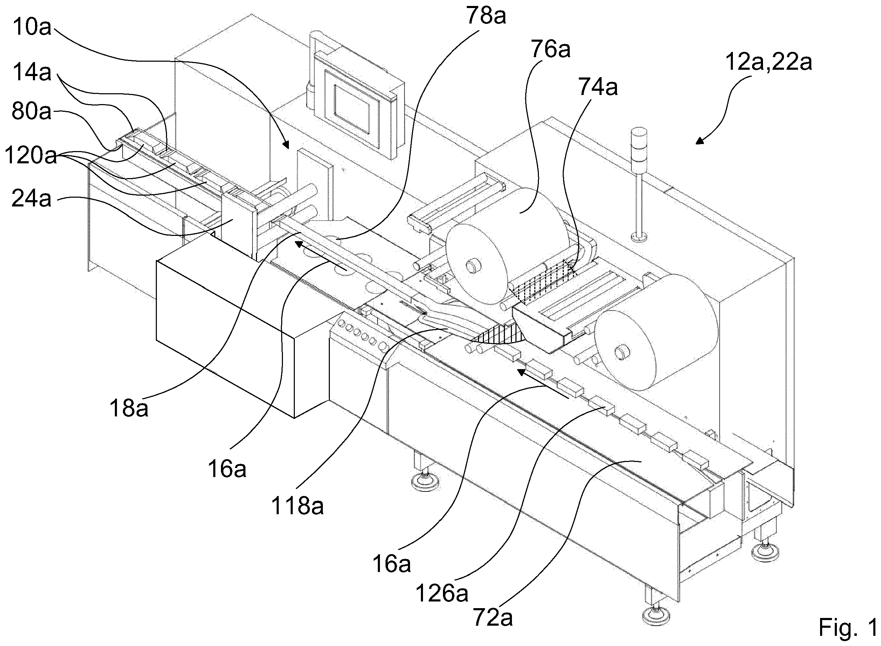

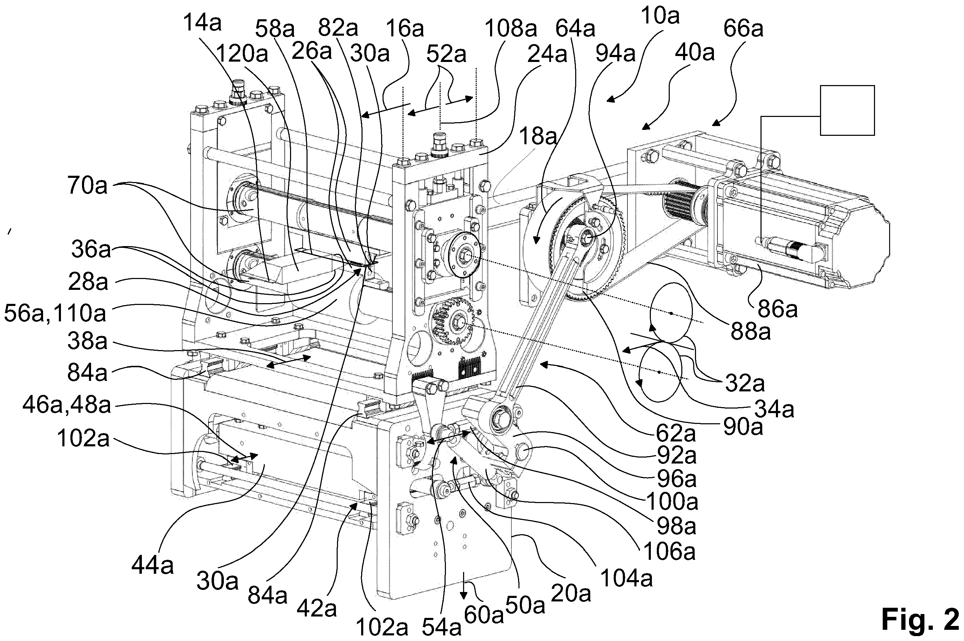

Figur 1 zeigt eine als horizontale Schlauchbeutelmaschine 12a ausgebildete Verpackungsmaschine 22a mit einer Horizontalquersiegelstation 10a. Zu verpackende Produkte 126a werden einbahnig auf einem Zufuhrträger 72a in einer horizontalen Transportrichtung 16a mittels hier nicht näher dargestellter Mitnehmer einer Zufuhrkette zur Horizontalquersiegelstation 10a geführt. Eine Materialbahn 74a wird von einer Packstoffrolle 76a abgerollt und mit Hilfe einer hier nur angedeuteten Formschulter 118a um die zu verpackenden Produkte 126a zu einem Folienschlauch 18a umgeformt. Der Folienschlauch 18a wird kontinuierlich in der horizontalen Transportrichtung 16a transportiert und unter den Produkten 126a durch eine Horizontallängssiegeleinheit 78a entlang einer Längssiegelnaht verschlossen. In der Folge verschließt die Horizontalquersiegelstation 10a den Folienschlauch 18a entlang von Quersiegelnähten 14a und bildet so verschlossene Packungen 120a mit den Produkten 126a. Die Horizontalquersiegelstation 10a bildet dabei jeweils gleichzeitig eine in Transportrichtung 16a erste Quersiegelnaht 14a einer in Transportrichtung 16a ersten Packung 120a und eine in Transportrichtung 16a zweite Quersiegelnaht 14a einer in Transportrichtung 16a zweiten Packung 120a. Gleichzeitig trennt die Horizontalquersiegelstation 10a den Folienschlauch 18a mittels eines mittig in Siegelflächen 30a eines Siegelbackenpaars 28a angeordneten Quetschmessers 82a (Figur 2), so dass diese Packung 120a mit zwei Quersiegelnähten 14a verschlossen ist und auf einem Auslaufband 80a aus der Schlauchbeutelmaschine 12a abtransportiert wird.

Figur 2 zeigt eine Ansicht der Horizontalquersiegelstation 10a. Eine Quersiegelstationsbasis 20a ist fest mit der Schlauchbeutelmaschine 12a verbunden. In Richtung entgegen einer Gewichtskraft 60a oberhalb der Quersiegelstationsbasis 20a ist eine Quersiegeleinheit 24a auf zwei mit der Quersiegelstationsbasis 20a fest verbundenen Linearführungen 84a in einer zur Transportrichtung 16a parallelen Verschiebebewegung 38a antreibbar gelagert.

Die Quersiegeleinheit 24a weist zwei drehbar gelagerte Siegelwellen 70a auf, an denen jeweils eine Siegelbacke 26a des Siegelbackenpaars 28a angeordnet ist. Die Siegelwellen 70a sind in Richtung der Gewichtskraft 60a so übereinander angeordnet, dass sich eine der Siegelbacken 26a ober- und eine unterhalb des Folienschlauchs 18a befindet. Die Siegelwellen 70a werden über ein hier nicht näher dargestelltes Koppelgetriebe synchron von einem hier ebenfalls nicht näher dargestellten Siegelantrieb angetrieben. Die Siegelbacken 26a führen jeweils kreisförmige Siegelbewegungen 32a um Siegelachsen der Siegelwellen 70a aus, in denen sich die Siegelflächen 30a der Siegelbackenpaare 28a aneinander annähern, um zwischen den Siegelflächen 30a Materiallagen 36a des Folienschlauchs 18a unter Erwärmung und Ausübung von Druck zu versiegeln, und sich am Ende des Siegelvorgangs wieder entfernen. Während des Siegelvorgangs entspricht die Siegelbewegung 32a einem Abrollen der beiden Siegelflächen 30a beidseitig des Folienschlauchs 18a. Die Siegelbewegung 32a weist eine Bewegungskomponente 34a in Transportrichtung 16a auf. Im Bereich der größten Annäherung des Siegelbackenpaars 28a, bei der die Siegelflächen 30a einander gegenüberliegend stehen, ist die Geschwindigkeit der Siegelbewegung 32a parallel zur Transportrichtung 16a und entspricht einer Tangentialgeschwindigkeit der Siegelflächen 30a.

Eine Antriebs- und Steuereinheit 40a ist dazu vorgesehen, die Quersiegeleinheit 24a in der Verschiebebewegung 38a während des Siegelvorgangs so anzutreiben, dass sich die Siegelflächen 30a der Siegelbacken 26a in der Transportrichtung 16a zumindest im Wesentlichen synchron zum Folienschlauch 18a bewegen. Ohne die Verschiebebewegung 38a muss, um eine Synchronität zwischen Siegelflächen 30a und Folienschlauch 18a zu erreichen, die Bewegungskomponente 34a in Transportrichtung 16a der Siegelflächen 30a während des Siegelvorgangs einer Geschwindigkeit entsprechen, in der der Folienschlauch 18a in der Transportrichtung 16a bewegt wird. Andernfalls würde der Folienschlauch 18a gedehnt und/oder gestaucht und/oder beschädigt. Die Siegelwellen 70a müssen in der rotierenden Siegelbewegung 32a während des Siegelvorgangs mit einer Winkelgeschwindigkeit angetrieben werden, derart dass die Tangentialgeschwindigkeit der Siegelflächen 30a der Geschwindigkeit des Folienschlauchs 18a in Transportrichtung 16a entspricht. Insbesondere bei hohen Geschwindigkeiten des Folienschlauchs 18a führt dies zu hohen Winkelgeschwindigkeiten der Siegelwellen 70a und damit zu sehr kurzen Kontaktzeiten der Siegelflächen 30a mit dem Folienschlauch 18a und kurzen Siegelzeiten. Durch die Verschiebebewegung 38a können die Siegelwellen 70a während des Siegelvorgangs mit einer geringeren Winkelgeschwindigkeit angetrieben werden. Die Bewegungskomponente 34a in der Transportrichtung 16a weist eine geringere Geschwindigkeit als die Bewegung des Folienschlauchs 18a in der Transportrichtung 16a auf. Eine Geschwindigkeitsdifferenz wird während des Siegelvorgangs durch die Verschiebebewegung 38a ausgeglichen. Die dadurch ermöglichte geringere Winkelgeschwindigkeit der Siegelwellen 70a während des Siegelvorgangs führt zu einer längeren Kontaktzeit der Siegelflächen 30a mit dem Folienschlauch 18a und längeren Siegelzeiten. Insbesondere kann die Siegelzeit innerhalb von Grenzen, die insbesondere durch eine maximale Auslenkung 52a, eine maximale Beschleunigung und eine maximale Geschwindigkeit der Verschiebebewegung 38a bestimmt werden, unabhängig von der Geschwindigkeit des Folienschlauchs 18a in Transportrichtung 16a eingestellt werden. Die Siegelzeit wird dabei durch die Kontaktzeit der Siegelflächen 30a mit dem Folienschlauch 18a und damit durch die Winkelgeschwindigkeit der Siegelwellen 70a während des Siegelvorgangs bestimmt. Eine Geschwindigkeitsdifferenz zwischen der resultierenden Tangentialgeschwindigkeit der Siegelflächen 30a und der Geschwindigkeit des Folienschlauchs 18a in Transportrichtung 16a wird durch die Verschiebebewegung 38a ausgeglichen. Zwischen den einzelnen Siegelvorgängen wird die Winkelgeschwindigkeit der Siegelwellen 70a und/oder die Geschwindigkeit der Verschiebebewegung 38a in einer Hinkbewegung so gesteuert, dass ein Abstand der erzeugten Quersiegelnähte 14a am Folienschlauch 18a einer gewünschten Packungslänge entspricht.

Die Antriebs- und Steuereinheit 40a weist einen Kurbeltrieb 62a auf, der dazu vorgesehen ist, die Verschiebebewegung 38a aus einer Antriebsbewegung 64a eines Verschiebeantriebs 66a der Quersiegeleinheit 24a zu erzeugen. Der Verschiebeantrieb 66a weist einen Servomotor 86a auf, der über einen Zahnriemen 88a ein Antriebsrad 90a antreibt. Eine Kurbel 92a ist an einem Exzenter 94a des Antriebsrads 90a angeordnet und überträgt die Antriebsbewegung 64a auf einen an der Quersiegelstationsbasis 20a an einem Anlenkpunkt 100a angelenkten Hebel 96a. Der Hebel 96a treibt über eine Schubstange 98a die Quersiegeleinheit 24a zyklisch in der Verschiebebewegung 38a an.

Weiter ist in der Quersiegelstationsbasis 20a eine Massenausgleichseinheit 42a mit einer antreibbar gelagerten Ausgleichsmasse 44a angeordnet, die in einer Ausgleichsbewegung 46a mit einer zur Verschiebebewegung 38a parallelen Bewegungskomponente 48a so angetrieben wird, dass sich die durch die Verschiebebewegung 38a und die durch die Ausgleichsbewegung 46a verursachten Massenkräfte teilweise aufheben. Die Ausgleichsmasse 44a ist mit zwei Linearführungen 102a an der Quersiegelstationsbasis 20a gelagert und wird von einer an einer bezüglich des Anlenkpunkts 100a gegenüberliegenden Seite des Hebels 96a angeordneten Schubstange 104a angetrieben. Die Ausgleichsmasse 44a bewegt sich somit in einer Ausgleichsbewegung 46a in Gegenrichtung zur Verschiebebewegung 38a der Quersiegeleinheit 24a. Die Ausgleichsmasse 44a hat eine Masse, die der Masse der Quersiegeleinheit 24a entspricht. Die durch die Verschiebebewegung 38a und die Ausgleichsbewegung 46a verursachten Massenkräfte heben sich daher bis auf ein Moment, welches aus dem Abstand des Massenschwerpunkts der Ausgleichsmasse 44a vom Massenschwerpunkt der Quersiegeleinheit 24a senkrecht zur Verschiebebewegung 38a resultiert, auf. Alternativ kann die Ausgleichsmasse 44a eine von der Quersiegeleinheit 24a abweichende Masse aufweisen und die Hebelverhältnisse des Hebels 96a können so angepasst werden, dass sich die durch die Verschiebebewegung 38a verursachten Massenkräfte wiederum bis auf das Moment, welches aus dem Abstand des Massenschwerpunkts der Ausgleichsmasse 44a vom Massenschwerpunkt der Quersiegeleinheit 24a senkrecht zur Verschiebebewegung 38a resultiert, aufheben. Um dies zu erreichen, muss das Hebelverhältnis so gewählt werden, dass die Geschwindigkeiten und die Massen der Ausgleichsmasse 44a und der Quersiegeleinheit 24a zueinander umgekehrt proportional sind. Das Moment wird über die Quersiegelstationsbasis 20a an die Schlauchbeutelmaschine 12a weitergegeben und über Füße der Schlauchbeutelmaschine 12a an ein Maschinenfundament abgeleitet.

Weiter ist eine Energiespeichereinheit 50a dazu vorgesehen, auf die Quersiegeleinheit 24a eine der Auslenkung 52a der Verschiebebewegung 38a entgegengesetzte Rückstellkraft 54a auszuüben. Die Energiespeichereinheit 50a weist ein Federelement 106a auf, das zwischen der Quersiegeleinheit 24a und der Ausgleichsmasse 44a angeordnet ist. In einer Neutralstellung 108a mit einer Auslenkung 52a von Null ist das Federelement 106a entspannt und übt keine Rückstellkraft 54a aus. In der Neutralstellung 108a sind die Quersiegeleinheit 24a und die Ausgleichsmasse 44a in Richtung der Verschiebebewegung 38a und der Ausgleichsbewegung 46a bezüglich eines maximalen Wegs der Verschiebebewegung 38a und der Ausgleichsbewegung 46a zentrisch angeordnet. Werden die Quersiegeleinheit 24a in der Verschiebebewegung 38a und die Ausgleichsmasse 44a in der entgegengesetzten Ausgleichsbewegung 46a bewegt, wird das Federelement 106a abhängig von einer Bewegungsrichtung verlängert oder verkürzt und übt zwischen der Quersiegeleinheit 24a und der Ausgleichsmasse 44a eine Zug- oder eine Druckkraft mit einer eine Rückstellkraft 54a bewirkenden Kraftkomponente aus. Die Rückstellkraft 54a wird mit zunehmender Auslenkung 52a größer. Im Umkehrpunkt des Exzenters 94a des Kurbeltriebs 62a, in dem die Auslenkung 52a am größten ist, weist die Rückstellkraft 54a den größten Betrag auf. Im Umkehrpunkt beträgt die Geschwindigkeit der Quersiegeleinheit 24a in Richtung der Verschiebebewegung 38a kurzzeitig Null. Die Rückstellkraft 54a bewirkt im Umkehrpunkt eine besonders hohe Beschleunigung der Quersiegeleinheit 24a, so dass die Geschwindigkeit schnell zunimmt. Eine Dynamik der Antriebs- und Steuereinheit 40a und damit der Bewegung der Quersiegeleinheit 24a in der Verschiebebewegung 38a wird durch die Energiespeichereinheit 50a wesentlich verbessert. Es können höhere Geschwindigkeiten erreicht werden, oder es kann ein kostengünstigerer Antrieb bei gleichen Geschwindigkeiten eingesetzt werden.

Weiter ist eine Stützeinheit 56a dazu vorgesehen, den Folienschlauch 18a in einem Siegelbereich 58a der Quersiegeleinheit 24a vor und/oder nach dem Siegelvorgang gegen die Gewichtskraft 60a abzustützen. Der Siegelbereich 58a ist dabei der Bereich der Quersiegeleinheit 24a, in dem sich die Siegelflächen 30a des Siegelbackenpaars 28a aneinander annähern und in Kontakt mit dem Folienschlauch 18a treten. Die Stützeinheit 56a wird von einem an der in Richtung der Gewichtskraft 60a unteren Siegelwelle 70a angeordneten Zylinder 110a gebildet, der sich um die untere Siegelwelle 70a erstreckt und von der Siegelbacke 26a der unteren Siegelwelle 70a durchdrungen wird. Der Zylinder 110a weist um die Siegelachse der unteren Siegelwelle 70a einen Radius auf, der um eine halbe, in Richtung der Gewichtskraft 60a gemessene Packungshöhe der Packungen 120a gegenüber dem Radius der Siegelflächen 30a um die Siegelachse reduziert ist. Zwischen den Siegelvorgängen liegt der die Produkte umhüllende Folienschlauch 18a auf der Stützeinheit 56a auf, so dass ein Durchhängen des Folienschlauchs 18a im Siegelbereich 58a vermieden wird und auf einer Auslaufseite die Packungen 120a nicht nach unten fallen können, bevor sie auf dem Auslaufband 80a aufliegen.

Die nachfolgende Beschreibung und die Zeichnung eines weiteren Ausführungsbeispiels beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels verwiesen werden kann. Zur Unterscheidung der Ausführungsbeispiele ist anstelle des Buchstabens a des ersten Ausführungsbeispiels der Buchstabe b den Bezugszeichen des weiteren Ausführungsbeispiels nachgestellt.

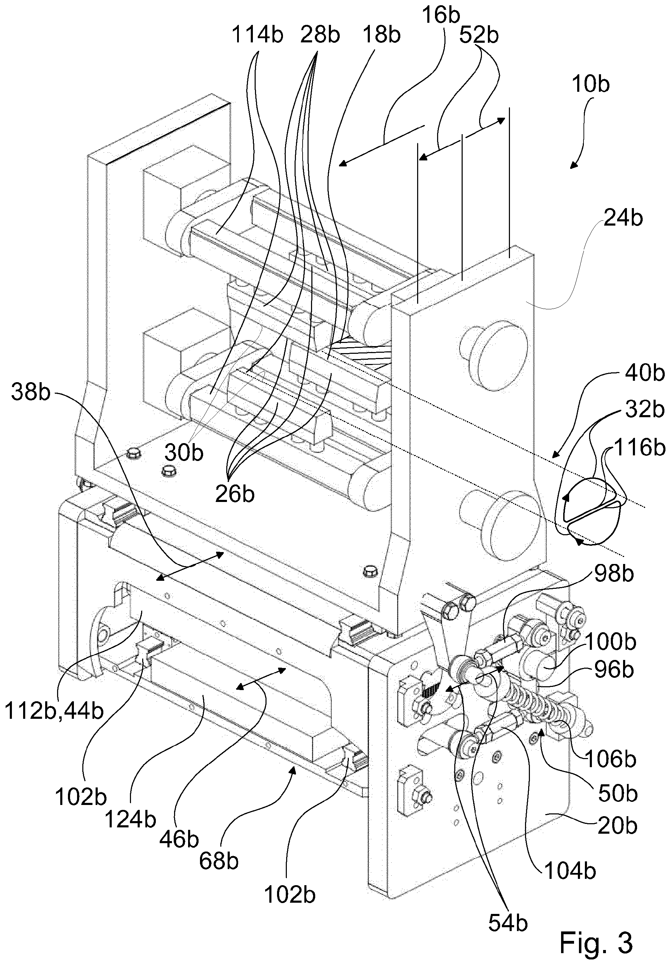

Figur 3 zeigt eine Ansicht einer Horizontalquersiegelstation 10b in einem zweiten Ausführungsbeispiel. Die Horizontalquersiegelstation 10b unterscheidet sich von der Horizontalquersiegelstation 10a des ersten Ausführungsbeispiels insbesondere dadurch, dass eine Antriebs- und/oder Steuereinheit 40b einen Linearantrieb 68b aufweist, der dazu vorgesehen ist, eine Verschiebebewegung 38b zu erzeugen. Der Linearantrieb 68b ist in einer Quersiegelstationsbasis 20b an zwei Linearführungen 102b entsprechend der Ausgleichsmasse 44a der Quersiegelstationsbasis 20a des ersten Ausführungsbeispiels angeordnet. Ein Sekundärteil 112b des Linearantriebs 68b bildet gleichzeitig eine Ausgleichsmasse 44b. Ein Primärteil 124b des Linearantriebs 68b ist fest an der Quersiegelstationsbasis 20b angeordnet, so dass ein Zuführen von elektrischer Leistung zum bewegten Teil des Linearantriebs 68b entfällt. Alternativ ist es möglich, dass ein Primärteil eines Linearantriebs bewegt wird und eine Ausgleichsmasse bildet. Über einen Hebel 96b, der an einem Anlenkpunkt 100b angeordnet ist, und zwei Schubstangen 98b, 104b treibt der Linearantrieb 68b eine Quersiegeleinheit 24b in der Verschiebebewegung 38b an. Der Linearantrieb 68b bewegt sich dabei in einer Ausgleichsbewegung 46b entgegengesetzt zur Verschiebebewegung 38b. Durch die Verschiebebewegung 38b und die Ausgleichsbewegung 46b verursachte Massenkräfte heben sich wie im ersten Ausführungsbeispiel bis auf ein verbleibendes Moment auf. Eine Energiespeichereinheit 50b weist ein Federelement 106b auf, das zwischen der Quersiegeleinheit 24b und der Quersiegelstationsbasis 20b angeordnet ist und abhängig von einer Auslenkung 52b der Quersiegeleinheit 24b in Richtung der Verschiebebewegung 38b auf die Quersiegeleinheit 24b eine Rückstellkraft 54b ausübt. Die Antriebs- und/oder Steuereinheit 40b erzeugt bei diesem Ausführungsbeispiel die Verschiebebewegung 38b unabhängig von einer Siegelbewegung. Ein Geschwindigkeitsprofil der Verschiebebewegung 38b kann dadurch einfach verändert werden. Der Verschiebeweg kann verstellt werden, so dass eine hohe Flexibilität erreicht wird. Insbesondere können eine Siegelbewegung 32b und die Siegelzeit optimal für ein Material eines Folienschlauchs 18b eingestellt werden. Die Geschwindigkeitsdifferenz der Siegelbewegung 32b während des Siegelvorgangs zur Geschwindigkeit des Folienschlauchs 18b in Transportrichtung 16b wird durch die Verschiebebewegung 38b ausgeglichen. Ist die Geschwindigkeit der Siegelbewegung 32b höher als die Geschwindigkeit des Folienschlauchs 18b in Transportrichtung 16b, erfolgt die Verschiebebewegung 38b während des Siegelvorgangs entgegen der Transportrichtung 16b.

Weiter unterscheidet sich die Horizontalquersiegelstation 10b von der Horizontalquersiegelstation 10a des ersten Ausführungsbeispiels dadurch, dass jeweils zwei Siegelbacken 26b in Transportrichtung 16b entsprechend einer gewünschten Packungslänge an jeweils zwei einander gegenüberliegenden D-Motion-Kurbeltrieben 114b hintereinander angeordnet sind, wobei jeweils einander gegenüberliegende Siegelbacken 26b ein Siegelbackenpaar 28b bilden. Die D-Motion-Kurbeltriebe 114b weisen eine Kinematik auf, die zu einer D-förmigen Siegelbewegung 32b der Siegelbacken 26b führt, wobei sich die gerade Strecke des "D" entlang der Transportrichtung 16b entlang einer Siegelstrecke 116b erstreckt, während der die Siegelbacken 26b in Kontakt mit dem Folienschlauch 18b sind. Solche D-Motion-Kurbeltriebe 114b sind dem Fachmann bekannt und bewirken eine verlängerte Siegelzeit, da sich Siegelflächen 30b der Siegelbacken 26b über die Siegelstrecke 116b synchron zum Folienschlauch 18b bewegen können. Eine erreichbare maximale Länge der Siegelstrecke 116b ist jedoch begrenzt, da eine Dynamik des D-Motion-Kurbeltriebs 114b bei einer Auslegung für eine große Siegelstrecke 116b zunehmend schlechter wird. Durch die zusätzliche Verschiebebewegung 38b kann ein Teil des Wegs, der vom Folienschlauch 18b in Transportrichtung 16b zurückgelegt wird, durch die Verschiebebewegung 38b ausgeglichen werden und die Siegelstrecke 116b bezogen auf die Quersiegeleinheit 24b kann verkürzt werden. Die Horizontalquersiegelstation 10b weist durch die Kombination der Quersiegeleinheit 24b mit dem D-Motion-Kurbeltrieb 114b und der zusätzlichen Verschiebebewegung 38b eine höhere Leistungsfähigkeit auf und kann längere Siegelzeiten sowie höhere Folienschlauchgeschwindigkeiten in Transportrichtung 16b und damit höhere Leistungen erreichen. Weiter ist eine hier nicht näher dargestellte Stützeinheit dazu vorgesehen, ein Durchhängen des Folienschlauchs 18b und/oder von hier ebenfalls nicht dargestellten Packungen vor und nach der Quersiegeleinheit 24b zu verhindern. Die Stützeinheit wird von in Transportrichtung 16b synchron mit den Siegelbacken 26b bewegten Bandkanten gebildet. Dabei ist ein Abstand zwischen den Bandkanten und den Siegelbacken 26b stets klein genug, dass der Folienschlauch 18b und/oder die Packungen nicht unzulässig durchhängen. Derartige Stützeinheiten sind dem Fachmann bekannt.

## Patentansprüche

1. Horizontalquersiegelstation, insbesondere für eine horizontale Schlauchbeutelmaschine (12a; 12b), zur Erstellung von Quersiegelnähten (14a; 14b) an zumindest einem, in einer kontinuierlichen, zumindest im Wesentlichen horizontalen Transportrichtung (16a; 16b) transportierten Folienschlauch (18a; 18b), mit einer Quersiegelstationsbasis (20a; 20b), die mit einer Verpackungsmaschine (22a; 22b) fest verbunden ist, mit einer Quersiegeleinheit (24a; 24b) und mit zumindest einem an der Quersiegeleinheit (24a; 24b) beweglich gelagerten, von zwei Siegelbacken (26a; 26b) gebildeten Siegelbackenpaar (28a; 28b), dessen Siegelflächen (30a; 30b) sich bei einem Siegelvorgang in einer Siegelbewegung (32a; 32b), die relativ zur Quersiegeleinheit (24a; 24b) zumindest eine Bewegungskomponente (34a; 34b) in der Transportrichtung (16a; 16b) aufweist, aneinander annähern, um zwischen den Siegelflächen (30a; 30b) Materiallagen (36a; 36b) des Folienschlauchs (18a; 18b) unter Erwärmung und/oder Ausübung von Druck zu versiegeln und am Ende des Siegelvorgangs wieder zu entfernen, **dadurch gekennzeichnet, dass** die Quersiegeleinheit (24a; 24b) an der Quersiegelstationsbasis (20a; 20b) mit einer zur Transportrichtung (16a; 16b) zumindest im Wesentlichen parallelen Verschiebebewegung (38a; 38b) antreibbar gelagert ist und die Horizontalquersiegelstation eine Massenausgleichseinheit (42a) mit zumindest einer antreibbar gelagerten Ausgleichmasse (44a; 44b) aufweist, wobei die Ausgleichsmasse (44a; 44b) in einer Ausgleichsbewegung (46a; 46b) mit zumindest einer zur Verschiebebewegung (38a; 38b) parallelen Bewegungskomponente (48a; 48b) so angetrieben wird, dass sich die durch die Verschiebebewegung (38a; 38b) und die durch die Ausgleichsbewegung (46a; 46b) verursachten Massenkräfte zumindest teilweise aufheben.

2. Horizontalquersiegelstation nach Anspruch 1, **gekennzeichnet durch** eine Antriebs- und/oder Steuereinheit (40a; 40b), die dazu vorgesehen ist, die Quersiegeleinheit (24a; 24b) in der Verschiebebewegung (38a; 38b) während des Siegelvorgangs so anzutreiben, dass eine Geschwindigkeitsdifferenz der Siegelbewegung (32a; 32b) und des Folienschlauchs (18a; 18b) in der Transportrichtung (16a; 16b) zumindest im Wesentlichen ausgeglichen wird.

3. Horizontalquersiegelstation nach einem der vorhergehenden Ansprüche, **gekennzeichnet durch** eine Energiespeichereinheit (50a; 50b), die dazu vorgesehen ist, auf die Quersiegeleinheit (24a; 24b) eine einer Auslenkung (52a; 52b) der Verschiebebewegung (38a; 38b) entgegengesetzte Rückstellkraft (54a; 54b) auszuüben.

4. Horizontalquersiegelstation nach einem der vorhergehenden Ansprüche, **gekennzeichnet durch** eine Stützeinheit (56a), die dazu vorgesehen ist, den Folienschlauch (18a) in einem Siegelbereich (58a) der Quersiegeleinheit (24a) vor und/oder nach dem Siegelvorgang gegen eine Gewichtskraft (60a) abzustützen.

5. Horizontalquersiegelstation nach einem der vorhergehenden Ansprüche, **gekennzeichnet durch** einen Kurbeltrieb (62a), der dazu vorgesehen ist, die Verschiebebewegung (38a) aus einer rotierenden Antriebsbewegung (64a) eines Verschiebeantriebs (66a) zu erzeugen.

6. Horizontalquersiegelstation nach einem der Ansprüche 1 bis 4, **gekennzeichnet durch** einen Linearantrieb (68b), der dazu vorgesehen ist, die Verschiebebewegung (38b) zu erzeugen.

7. Horizontalquersiegelstation nach einem der vorhergehenden Ansprüche, **dadurch gekennzeichnet, dass die** Siegelbacken (26a) an an der Quersiegeleinheit (24a) drehbar gelagerten Siegelwellen (70a) gelagert sind.

8. Horizontalquersiegelstation nach einem der Ansprüche 1 bis 6, **dadurch gekennzeichnet, dass** die Siegelbacken (26b) an an der Quersiegeleinheit (24b) gelagerten Kurbeltrieben (114b) gelagert sind.

9. Horizontale Schlauchbeutelmaschine (12a; 12b) mit einer Horizontalquersiegelstation (10a; 10b) nach einem der vorhergehenden Ansprüche.

## Claims

1. Horizontal transverse sealing station for a horizontal tubular bag machine (12a; 12b), for producing transverse sealing seams (14a; 14b) on at least one film tube (18a; 18b) transported in a continuous, at least substantially horizontal transport direction (16a; 16b), comprising a transverse sealing station base (20a; 20b), which is fixedly connected to the tubular bag machine (22a; 22b), comprising a transverse sealing unit (24a; 24b), and comprising at least one sealing jaw pair (28a; 28b), which is movably mounted on the transverse sealing unit (24a; 24b) and is formed by two sealing jaws (26a; 26b) and the sealing surfaces (30a; 30b) of which, during a sealing process, come closer together in a sealing movement (32a; 32b) having relative to the transverse sealing unit (24a; 24b) at least one movement component (34a; 34b) in the transport direction (16a; 16b), in order to seal material layers (36a; 36b) of the film tube (18a; 18b) between the sealing surfaces (30a; 30b), under the application of heat and/or pressure, and to move said material surfaces apart again at the end of the sealing process, **characterized in that** the transverse sealing unit (24a; 24b) is mounted drivably on the transverse sealing station base (20a; 20b) with a displacement movement (38a; 38b) at least substantially parallel to the transport direction (16a; 16b) and the horizontal transverse sealing station has a mass compensating unit (42a) comprising at least one drivably mounted compensating mass (44a; 44b), wherein the compensating mass (44a; 44b), in a compensation movement (46a; 46b) comprising at least one movement component (48a; 48b) parallel to the displacement movement (38a; 38b), is driven such that the inertial forces induced by the displacement movement (38a; 38b) and those induced by the compensation movement (46a; 46b) are at least partially eliminated.

2. Horizontal transverse sealing station according to Claim 1, **characterized by** a drive and/or control unit (40a; 40b), which is designed to drive the transverse sealing unit (24a; 24b) in the displacement movement (38a; 38b) during the sealing process such that a velocity difference of the sealing movement (32a; 32b) and of the film tube (18a; 18b) in the transport direction (16a; 16b) is at least substantially compensated.

3. Horizontal transverse sealing station according to either of the preceding claims, **characterized by** an energy storage unit (50a; 50b), which is designed to apply a restoring force (54a; 54b), opposite to a deflection (52a; 52b) of the displacement movement (38a; 38b), to the transverse sealing unit (24a; 24b).

4. Horizontal transverse sealing station according to one of the preceding claims, **characterized by** a supporting unit (56a), which is designed to support the film tube (18a) in a sealing region (58a) of the transverse sealing unit (24a), before and/or after the sealing process, against a weight force (60a).

5. Horizontal transverse sealing station according to one of the preceding claims, **characterized by** a crank mechanism (62a), which is designed to generate the displacement movement (38a) from a rotary drive movement (64a) of a displacement drive (66a).

6. Horizontal transverse sealing station according to one of Claims 1 to 4, **characterized by** a linear drive (68b), which is designed to generate the displacement movement (38b).

7. Horizontal transverse sealing station according to one of the preceding claims, **characterized in that** the sealing jaws (26a) are mounted on sealing shafts (70a) mounted rotatably on the transverse sealing unit (24a).

8. Horizontal transverse sealing station according to one of Claims 1 to 6, **characterized in that** the sealing jaws (26b) are mounted on crank mechanism (114b) mounted on the transverse sealing unit (24b).

9. Horizontal tubular bag machine (12a; 12b) comprising a horizontal transverse sealing station (10a, 10b) according to one of the preceding claims.

## Revendications

1. Poste horizontal de soudage transversal, en particulier pour une machine de fabrication de sachets tubulaires horizontale (12a ; 12b), pour créer des joints soudés transversaux (14a ; 14b) au niveau d'au moins un tuyau de feuille (18a ; 18b) transporté dans une direction de transport continue (16a ; 16b), au moins essentiellement horizontale, avec une base de poste de soudage transversal (20a ; 20b) qui est connectée fixement à une machine d'emballage (22a ; 22b), avec une unité de soudage transversal (24a ; 24b) et avec au moins une paire de mâchoires de soudage (28a ; 28b) supportée de manière déplaçable sur l'unité de soudage transversal (24a ; 24b), formée par deux mâchoires de soudage (26a ; 26b), dont les surfaces de soudage (30a ; 30b) se rapprochent l'une de l'autre lors d'une opération de soudage par un mouvement de soudage (32a ; 32b) qui présente, par rapport à l'unité de soudage transversal (24a ; 24b), au moins une composante de mouvement (34a ; 34b) dans la direction de transport (16a ; 16b), afin de souder entre les surfaces de soudage (30a ; 30b) des couches de matériau (36a ; 36b) du tuyau de feuille (18a ; 18b) par chauffage et/ou application de pression et de les enlever à nouveau à la fin de l'opération de soudage,
**caractérisé en ce que** l'unité de soudage transversal (24a ; 24b) est supportée sur la base du poste de soudage transversal (20a ; 20b) de manière à pouvoir être entraînée avec un mouvement de déplacement (38a ; 38b) au moins essentiellement parallèle à la direction de transport (16a ; 16b) et le poste horizontal de soudage transversal présente une unité d'équilibrage de masse (42a) avec au moins une masse d'équilibrage (44a ; 44b) supportée de manière à pouvoir être entraînée, la masse d'équilibrage (44a ; 44b) étant entraînée dans un mouvement d'équilibrage (46a ; 46b) avec au moins une composante de mouvement (48a ; 48b) parallèle au mouvement de déplacement (38a ; 38b), de telle sorte que les forces de masse causées par le mouvement de déplacement (38a ; 38b) et par le mouvement d'équilibrage (46a ; 46b) s'annulent au moins en partie.

2. Poste horizontal de soudage transversal selon la revendication 1, **caractérisé par** une unité d'entraînement et/ou de commande (40a ; 40b) qui est prévue pour entraîner l'unité de soudage transversal (24a ; 24b) dans le mouvement de déplacement (38a ; 38b) pendant l'opération de soudage de telle sorte qu'une différence de vitesse du mouvement de soudage (32a ; 32b) et du tuyau de feuille (18a ; 18b) dans la direction de transport (16a ; 16b) soit au moins essentiellement équilibrée.

3. Poste horizontal de soudage transversal selon l'une quelconque des revendications précédentes, **caractérisé par** une unité d'accumulation d'énergie (50a ; 50b) qui est prévue pour exercer sur l'unité de soudage transversal (24a ; 24b) une force de rappel (54a ; 54b) opposée à une déviation (52a ; 52b) du mouvement de déplacement (38a ; 38b).

4. Poste horizontal de soudage transversal selon l'une quelconque des revendications précédentes, **caractérisé par** une unité de support (56a) qui est prévue pour supporter le tuyau de feuille (18a) dans une région de soudage (58a) de l'unité de soudage transversal (24a) avant et/ou après l'opération de soudage à l'encontre d'une force de pesanteur (60a).

5. Poste horizontal de soudage transversal selon l'une quelconque des revendications précédentes, **caractérisé par** un entraînement à manivelle (62a) qui est prévu pour générer le mouvement de déplacement (38a) à partir d'un mouvement d'entraînement de rotation (64a) d'un entraînement de déplacement (66a).

6. Poste horizontal de soudage transversal selon l'une quelconque des revendications 1 à 4, **caractérisé par** un entraînement linéaire (68b) qui est prévu pour générer le mouvement de déplacement (38b).

7. Poste horizontal de soudage transversal selon l'une quelconque des revendications précédentes, **caractérisé en ce que** les mâchoires de soudage (26a) sont supportées au niveau d'arbres de soudage (70a) supportés à rotation sur l'unité de soudage transversal (24a).

8. Poste horizontal de soudage transversal selon l'une quelconque des revendications 1 à 6, **caractérisé en ce que** les mâchoires de soudage (26b) sont supportées au niveau d'entraînements à manivelle (114b) supportés sur l'unité de soudage transversal (24b).

9. Machine de fabrication de sachets tubulaires horizontale (12a ; 12b) comprenant un poste horizontal de soudage transversal (10a ; 10b) selon l'une quelconque des revendications précédentes.
